# EUROPÄISCHE PATENTSCHRIFT

(11) **EP 1 780 424 B1**
(45) Veröffentlichungstag und Bekanntmachung des Hinweises auf die Patenterteilung: **16.05.2012**
(21) Anmeldenummer: 06021825.2
(22) Anmeldetag: 18.10.2006
(51) Int. Cl.: F16B 5/02

(54) **Befestigungseinrichtung mit Toleranzausgleich**
Fastening arrangement with tolerance compensation
Dispositif de fixation à compensation de tolérances

(30) Priorität: 26.10.2005 DE 202005016823 U
(43) Veröffentlichungstag der Anmeldung: 02.05.2007
(73) Patentinhaber: Böllhoff Verbindungstechnik GmbH, 33649 Bielefeld (DE)
(72) Erfinder: Burger, Ingo, 33758 Schloß Holte (DE); Figge, Hans-Ulrich, 33758 Schloß Holte (DE)
(74) Vertreter: Heyer, Volker

(56) Entgegenhaltungen:
- EP-A- 1 503 088
- DE-U1- 20 021 194
- US-B1- 6 308 476

## Beschreibung

Die vorliegende Erfindung betrifft eine Befestigungseinrichtung zum Befestigen eines Bauteils B an einem Bauteil A mit selbsttätigem Ausgleich von Toleranzen im Abstand zwischen den beiden Bauteilen.

Derartige Befestigungseinrichtungen mit Toleranzausgleich sind in großer Vielfalt bekannt. Sie bestehen üblicherweise aus einer Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der beiden Bauteile anlegt, worauf dann beim Weiterdrehen der Befestigungsschraube und entsprechende Erhöhung des Drehmomentes die Reibschlussverbindung überwunden wird, so dass dann die beiden Bauteile durch die Befestigungsschraube über die Verstellbuchse miteinander verspannt werden können.

DE 200 21 194 U1 offenbart eine Vorrichtung zum Verbinden von Bauteilen mit einem an dem einen Bauteil angeordneten Basisteil, einem Abstandshalter, der mit dem Basisteil in Gewindeeingriff steht und sich mit einem Ende an dem anderen Bauteil abstützt, und einer reibschlüssig durch den Abstandshalter gesteckten Verbindungsschraube. Die Bewegung des Abstandshalters relativ zum Basisteil in eine Richtung wird durch eine am Ende des Gewindeabschnitts des Abstandshalters gebildete Schulter begrenzt, die axial an einem erst nach dem Zusammenbau von Abstandshalter und Basisteil wirksam werdenden Anschlag des Basisteils anstößt.

Aus dem deutschen Gebrauchsmuster Nr. 20 2005 009 017.4 ist eine derartige Toleranzausgleichsanordnung bekannt, bei der das Verstellelement aus der eigentlichen Verstellbuchse und einem davon getrennten Mitnehmer besteht. Der Mitnehmer ist mit der Verstellbuchse lösbar verbunden und hat mehrere in Umfangsrichtung verteilte Klemmabschnitte, die mit dem Gewinde der Befestigungsschraube die Reibschlussverbindung (Mitschleppverbindung) bildet. Das Aufnahmeelement und die Verstellbuchse bestehen aus einem relaxationsarmen Kunststoff, insbesondere aus einem Duroplast. Der Mitnehmer besteht aus einem elastisch nachgiebigen Kunststoff, insbesondere aus einem Thermoplast. Das Aufnahmeelement hat einen Befestigungsabschnitt mit einem selbstfurchenden und/oder -formenden Gewinde, das zum Herstellen einer Schraubverbindung in das eine Bauteil einschraubbar ist, wobei die Schraubverbindung eine Kunststoff-in-Kunststoff-Schraubverbindung ist. Der Mitnehmer und das Aufnahmeelement sind mit Arretierungsmitteln in Form von über den Umfang verteilten, rastend ineinander greifenden Noppen des Mitnehmers und des Aufnahmeelementes versehen, die für eine Transportsicherung dienen.

Der vorliegenden Erfindung liegt die Aufgabe zugrunde, eine Befestigungseinrichtung mit selbsttätigem Toleranzausgleich der angegebenen Gattung so weiterzubilden, dass die Herstellung und Montage der Befestigungseinrichtung vereinfacht werden.

Die Befestigungseinrichtung gemäß der vorliegenden Erfindung ist in Anspruch 1 definiert.

Bei der erfindungsgemäß ausgebildeten Befestigungseinrichtung ist nicht nur das Aufnahmeelement, sondern auch das Verstellelement einstückig ausgebildet. Das Verstellelement ist beim Verschrauben mit dem Aufnahmeelement in eine als Transport- und Einbaulage dienende Endstellung bewegbar, in der das Aufnahmeelement und Verstellelement durch eine lösbare Rastverbindung in einer von mehreren vorgegebenen Winkelpositionen zueinander gehalten werden.

Flansche des Aufnahmeelements und des Verstellelements haben, zum Ansetzen eines gemeinsamen Schraubschlüssels, unrunde Umfangskonturen, insbesondere Mehrkantkonturen, die in den vorgegebenen Winkelpositionen miteinander fluchten. Die lösbare Mitschleppverbindung hat zweckmäßigerweise ein größeres Lösemoment als die Rastverbindung, so dass sich bei der Montage der Befestigungseinrichtung zuerst die Rastverbindung löst, ehe sich die Mitschleppverbindung löst.

Da bei der erfindungsgemäß ausgebildeten Befestigungseinrichtung das Verstellelement nicht aus zwei getrennten Elementen, sondern nur aus einem einzigen Element besteht, vereinfachen sich der konstruktive Aufbau der Befestigungseinrichtung sowie die Herstellung ihrer einzelnen Elemente. Da ferner das Aufnahmeelement und das Verstellelement aufgrund der lösbaren Rastverbindung gemeinsam gehandhabt und insbesondere mittels eines gemeinsamen Schraubschlüssels an dem zugehörigen Bauteil angebracht werden können, vereinfacht sich auch die Montage der Befestigungseinrichtung.

Weitere vorteilhafte Ausgestaltungen der Erfindung gehen aus den Unteransprüchen hervor.

Anhand der Zeichnungen wird ein Ausführungsbeispiel der Erfindung näher erläutert. Es zeigt:
Fig. 1 eine Seitenansicht eines Verstellelementes;
Fig. 2 eine Draufsicht auf das Verstellelement in Fig. 1;
Fig. 3 eine perspektivische Ansicht des Verstellelementes in den Figuren 1 und 2;
Fig. 4 eine Seitenansicht eines Aufnahmeelementes;
Fig. 5 eine Draufsicht auf das Verstellelement in Fig. 4;
Fig. 6 eine perspektivische Ansicht des Verstellelementes in den Figuren 4 und 5;
Fig. 7 eine perspektivische Ansicht einer aus dem Aufnahmeelement und Verstellelement bestehenden Baueinheit und dem Bauteil A vor der Montage;
Fig. 8 eine der Fig. 7 entsprechende perspektivische Ansicht nach der Montage der Baueinheit E im Bauteil A;
Fig. 9 eine Schnittansicht der Baueinheit E und des Bauteils A nach der Montage gemäß Fig. 8;
Fig. 10 eine Schnittansicht einer erfindungsgemäß ausgebildeten Befestigungseinrichtung im fertig montierten Zustand;
Fig. 11 bis 14 perspektivische Ansichten der in Fig. 10 gezeigten Befestigungseinrichtung in unterschiedlichen Montagezuständen;
Fig. 15 bis 17 den Figuren 3, 6 und 8 entsprechende Ansichten einer abgewandelten Ausführungsform der Befestigungeinrichtung;
Fig. 18 eine Einzelheit der Fig. 17 in vergrößertem Maßstab;
Fig. 19 eine der Fig. 10 entsprechende Schnittansicht einer weiteren abgewandelten Ausführungsform der Befestigungseinrichtung.

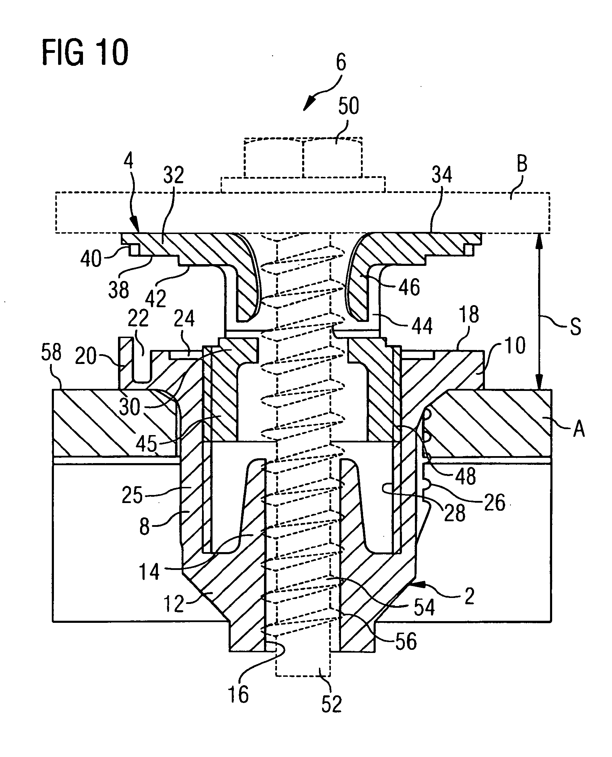

Die in Fig. 10 dargestellte Befestigungseinrichtung dient zum Befestigen eines Bauteils B an einem Bauteil A. Das Bauteil A ist beispielsweise ein Träger eines Kraftfahrzeuges, während das Bauteil B ein durch Lehren fixiertes Teil eines Scheinwerfergehäuses ist. Das Bauteil A und das Bauteil B haben einen Abstand S voneinander, der aufgrund von montage- und/oder fertigungsbedingten Toleranzen variieren kann. Die dargestellte Befestigungseinrichtung ermöglicht einen selbsttätigen Ausgleich dieser Toleranzen. Da das Scheinwerfergehäuse auch an anderen Stellen (nicht gezeigt) geführt werden kann, ist an dieser Stelle keine kraftschlüssige Verbindung zwischen den Bauteilen A und B erforderlich; d.h., dass im fertig montierten Zustand eine seitliche Verschiebung der Bauteile A und B unter Überwindung einer entsprechenden Reibung ggf. noch möglich ist.

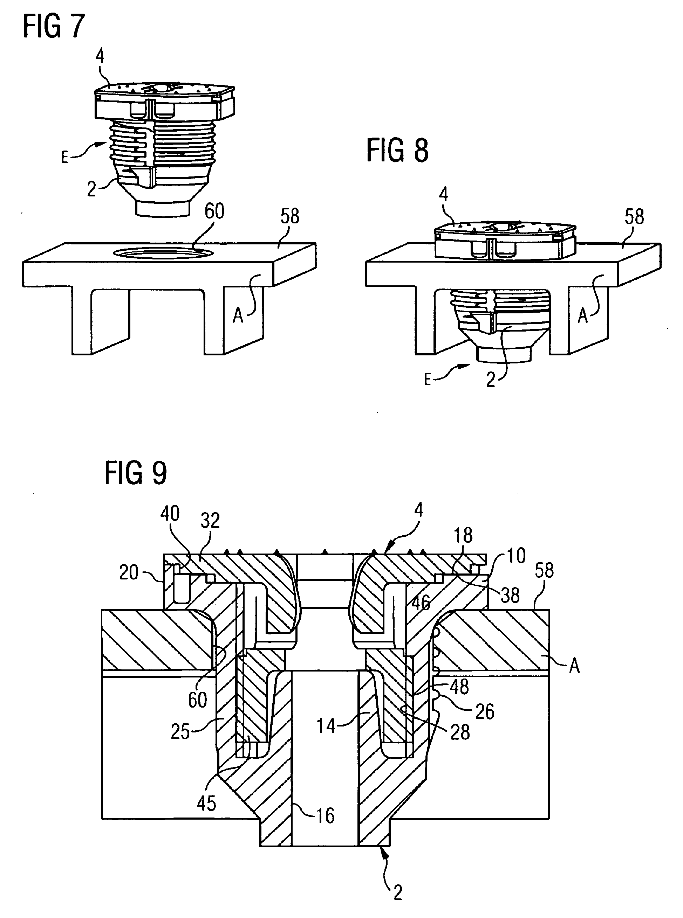

Die Befestigungseinrichtung besteht aus einem Aufnahmeelement 2, einem Verstellelement 4 und einer Befestigungsschraube 6. Das Aufnahmeelement 2 und das Verstellelement 4 bilden eine vormontierbare Baueinheit E (s. Fig. 7 bis 9), wie noch genauer erläutert wird.

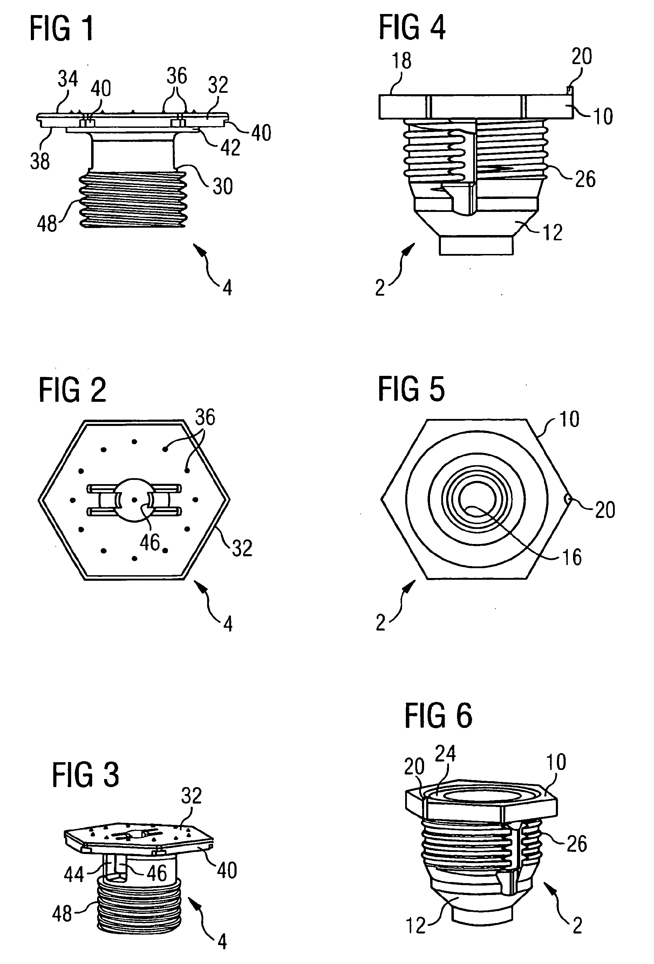

Es wird nun zusätzlich zu Fig. 10 auf die Figuren 4 bis 6 Bezug genommen, in denen das Aufnahmeelement 2 im Einzelnen dargestellt ist. Das einstückig ausgebildete Aufnahmeelement 2 besteht aus einem hülsenförmigen Körper 8, der an seinem einen axialen Ende in einen Flansch 10 und an seinem anderen axialen Ende in einen konischförmig ausgebildeten Einführabschnitt 12 übergeht. An dem Einführabschnitt 12 ist ein axial einwärts verlaufender, hülsenförmiger Ansatz 14 angeformt, der mit einer glattwandigen Bohrung 16 versehen ist.

Der Flansch 10 hat eine in einer Radialebene liegende Stirnfläche 18, in der ein einzelner axial verlaufender Rastvorsprung 20 gebildet ist. Wie in Fig. 10 zu sehen ist (in den Fig. 4 bis 6 jedoch nicht dargestellt ist), ist der Rastvorsprung 20 innerhalb einer Ausnehmung 22 angeordnet, wobei er von einem unteren Bereich des Flansches 10 axial nach oben verläuft und um einen vorgegebenen Betrag über die zugehörige Stirnfläche 18 des Flansches 10 vorsteht. Der Zweck des Rastvorsprunges 20 wird noch genauer erläutert. In der Stirnfläche 18 des Flansches 10 ist ferner eine ringförmige Ausnehmung 24 gebildet.

Der hülsenförmige Körper 8 des Aufnahmeelementes 2 besteht in dem Bereich zwischen dem Flansch 10 und dem Einführabschnitt 12 aus einer hülsenförmigen Wand 25, an deren Außenseite ein Außengewinde 26 vorgesehen ist. Das Außengewinde 26 ist im vorliegenden Fall als selbstformendes und/oder -furchendes Gewinde ausgebildet, das mit einer glattwandigen Bohrung 60 des Bauteils A eine Kunststoff-in-Kunststoff-Gewindeverbindung bildet, wie sie z.B. aus der DE 10 2004 021 484 bekannt ist. Das Aufnahmeelement 2 könnte jedoch auch auf andere Weise an dem Bauteil A festgelegt werden. Das Aufnahmeelement 2 ist ferner mit einem Innengewinde 28 versehen, das sich über die Innenseiten der hülsenförmigen Wand 25 und des Flansches 10 erstreckt.

Zusätzlich zu Fig. 10 wird nun auf die Figuren 1 bis 3 Bezug genommen, die das Verstellelement 4 im Einzelnen zeigen. Das Verstellelement 4 besteht aus einem hülsenförmigen Körper 30, der an seinem oberen Ende in einen Flansch 32 übergeht. Der Flansch 32 hat an seiner Oberseite eine Stirnfläche 34, an der kleine, axial nach oben ragende Spitzen 36 (s. Fig. 1 bis 3) angeformt sind.

Der Flansch 32 ist auf der von der Stirnfläche 34 abgewandten Seite mit einer Stirnfläche 38 versehen, in der mehrere über den Umfang verteilte Rastvertiefungen 40 gebildet sind. Die Rastvertiefungen 40 wirken mit dem Rastvorsprung 20 des Aufnahmeelementes 2 in der Weise zusammen, dass sie eine lösbare Rastverbindung bilden können, die dafür sorgt, dass das Aufnahmeelement 2 und das Verstellelement 4 in vorgegebenen Winkelpositionen zueinander fluchten, wie noch genauer erläutert wird.

Wie insbesondere in den Fig. 2 und 5 zu sehen ist, haben das Aufnahmeelement 2 und das Verstellelement 4 im Bereich ihrer Flansche 10 und 32 unrunde Umfangskonturen, die im dargestellten Ausführungsbeispiel jeweils als Sechskant ausgebildet sind, jedoch auch andere Formen haben können. Wenn diese miteinander fluchten, kann ein gemeinsamer Schraubschlüssel (nicht gezeigt) an den Flanschen 10 und 32 angesetzt werden, um das Aufnahmeelement 2 und das Verstellelement 4 gemeinsam zu drehen.

An der Unterseite des Flansches 32 ist ein ringförmiger Ansatz 42 vorgesehen, der in die ringförmige Ausnehmung 24 des Flansches 10 des Aufnahmeelementes 2 eintauchen kann. Der hülsenförmige Körper 30 des Verstellelementes 4 ist in einem Bereich unterhalb des Flansches 32 mit zwei diametral gegenüberliegenden Fenstern 44 versehen, in denen zwei elastisch angeformte Mitschlepparme 46 angeordnet sind, s. insbesondere Fig. 3, 9 und 10. Die Mitschlepparme 46 sind am inneren Umfang des Flansches 32 angeformt, verlaufen von dort axial nach unten und stehen radial so weit nach innen vor, dass sie eine Mitschleppverbindung mit der Schraube 6 bilden können, wie ebenfalls noch genauer erläutert wird.

Der hülsenförmige Körper 30 des Verstellelementes 4 hat in seinem unteren Bereich einen schürzenförmigen Ansatz 45, der an seinem Umfang mit einem Außengewinde 48 versehen ist.

Die Schraube 6 ist beispielsweise eine herkömmliche Stahlschraube mit einem Kopf 50, einem Gewindeschaft 52 und einem selbstschneidenden und/oder -furchenden Gewinde 54, das beim Einschrauben in die glattwandige Bohrung 16 des Aufnahmeelementes 2 ein Gegengewinde 56 formt.

Die Bauteile A und B bestehen vorzugsweise aus Kunststoff. Das Bauteil A besteht beispielsweise aus einem glasfaserverstärkten PP, während das Bauteil B aus einem weicheren Kunststoff, beispielsweise einem PP mit Talkum besteht.

Das Aufnahmeelement 2 und das Verstellelement 4 bestehen ebenfalls aus Kunststoff, wobei der Kunststoff des Aufnahmeelementes 2 zweckmäßigerweise härter als der Kunststoff des Verstellelementes 4 ist. Beispielsweise besteht das Aufnahmeelement 2 aus einem faserverstärkten PPA, z.B. mit einem Glasfaseranteil von 50%. Das Verstellelement 4 besteht beispielsweise aus einem faserverstärkten PA, z.B. mit einem Glasfaseranteil von 30%.

Im Folgenden werden die Montage und Funktionsweise der Befestigungseinrichtung erläutert:

Zunächst werden das Aufnahmeelement 2 und das Verstellelement 4 über das Innengewinde 28 und das Außengewinde 48 miteinander verschraubt, um die vormontierte Baueinheit E zu bilden, s. Fig. 7 und 9. Beim Einschrauben des Verstellelementes 4 in das Aufnahmeelement 2 rastet der Rastvorsprung 20 in eine der sechs Rastvertiefungen 40 ein, kurz bevor die Stirnflächen 18 und 38 der Flansche 10 und 32 des Aufnahmeelementes 2 und Verstellelementes 4 in Anlage miteinander gelangen. In der Raststellung beträgt der maximale Abstand zwischen den Stirnflächen 18 und 38 ein Sechstel der Gewindesteigung der Gewindeverbindung 28, 48; er ist somit gleich der Gewindesteigung, geteilt durch die Anzahl der Rastvertiefungen.

Der Rastvorsprung 20 und die entsprechende Rastvertiefung 40 bilden somit eine lösbare Rastverbindung, durch die das Aufnahmeelement 2 und das Verstellelement 4 in einer von sechs vorgegebenen Winkelpositionen lösbar gehalten werden. In diesen Winkelpositionen sind das Aufnahmeelement 2 und das Verstellelement 4 so zueinander ausgerichtet, dass ihre unrunden Umfangskonturen (Sechskant) zueinander fluchten.

Die Rastverbindung 20, 40 zwischen dem Aufnahmeelement 2 und dem Verstellelement 4 erfüllt zwei Funktionen. Zum einen dient sie als Transportsicherung, so dass das Aufnahmeelement 2 und das Verstellelement 4 als Baueinheit E gehandhabt werden können. Zum anderen sichert die Rastverbindung das Aufnahmeelement 2 und das Verstellelement 4 in einer der sechs vorgegebenen Winkelpositionen, in der die Baueinheit E durch einen gemeinsamen Schraubschlüssel (Sechskantnuss, nicht gezeigt) in die Bohrung 60 des Bauteils A eingeschraubt werden kann, s. Fig. 8 und 9.

Wie insbesondere in Fig. 9 zu sehen ist, taucht in der Raststellung der schürzenförmige Ansatz 45 des Verstellelementes 4 in den Ringraum zwischen dem hülsenförmigen Ansatz 14 und der hülsenförmigen Wand 25 des Aufnahmeelementes 2. Ferner wird der ringförmige Ansatz 42 des Verstellelementes 4 von der ringförmigen Ausnehmung 24 des Aufnahmeelementes 2 aufgenommen. Hierdurch ergibt sich eine geringe axiale Baulänge der Baueinheit E.

Wie bereits erwähnt, ist das Außengewinde 26 des Aufnahmeelementes 2 ein selbstformendes bzw. -furchendes Gewinde, das in der glattwandigen Bohrung 60 des Bauteils A ein Gegengewinde bildet. Die Baueinheit E wird in das Bauteil A eingeschraubt, bis der Flansch 10 des Aufnahmeelementes 2 an der Oberseite 58 des Bauteils A anliegt, s. Fig. 8 und 9.

Es kann nun das Bauteil B des Scheinwerfergehäuses (nicht gezeigt) mittels Lehren in einer Lage fixiert werden, in der es von dem Bauteil A den Abstand S hat. Wie bereits erwähnt, kann der Abstand S aufgrund von Montage- und/oder Fertigungstoleranzen variieren. Beim Montieren der Befestigungseinrichtung, was nun anhand der Fig. 10 bis 14 beschrieben wird, erfolgt ein automatischer Toleranzausgleich.

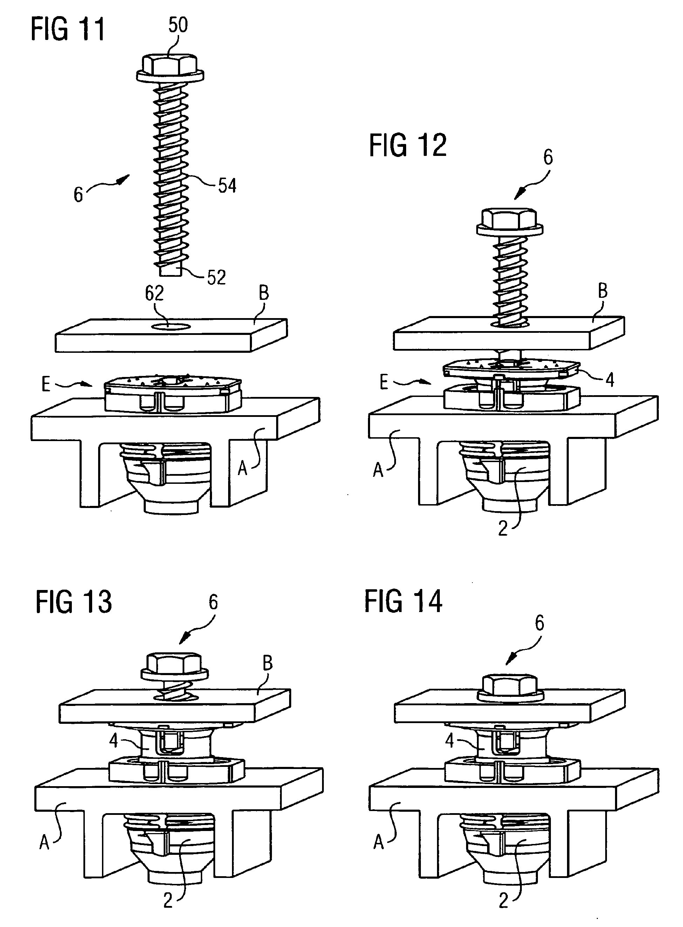

Wie aus den Fig. 11 und 12 hervorgeht, wird zunächst die Schraube 6 durch ein Loch 62 des Bauteils B in die Baueinheit E eingedreht. Aufgrund der Mitschleppverbindung zwischen dem Gewinde 54 der Schraube 6 und den Mitschlepparmen 46 des Verstellelementes 4 wird das Verstellelement 4 mitgedreht. Das Innengewinde 28 des Aufnahmeelementes 2 und das Außengewinde 48 des Verstellelementes 4 bilden eine Gewindeverbindung, die im dargestellten Ausführungsbeispiel linksgängig ist. Das Verstellelement 4 wird daher von der Schraube 6 aus dem Aufnahmeelement 2 herausgeschraubt.

Die Mitschleppverbindung zwischen den Mitschlepparmen 46 und dem Gewinde 54 der Schraube 6 sowie die Rastverbindung zwischen dem Rastvorsprung 20 und den Rastvertiefungen 40 sind so ausgelegt, dass das Lösemoment der Mitschleppverbindung 46, 54 größer ist als das Lösemoment der Rastverbindung 20, 40. Dies wird durch Geometrie und Wahl der Werkstoffe (z.B. einen hohen Glasfaseranteil im Kunststoff des Verstellelementes 4) erreicht. Hierdurch wird sichergestellt, dass beim Mitschleppen des Verstellelementes 4 der Rastvorsprung 20 aus der betreffenden Rastvertiefung 40 rutscht, ohne dass die Mitschleppverbindung zwischen dem Gewinde 54 der Schraube 6 und den Mitschlepparmen 46 des Verstellelementes 4 gelöst wird.

Wenn der Flansch 32 in Anlage mit dem Bauteil B gelangt, werden die Spitzen 36 in das Material des Bauteils B eingedrückt. Das Verstellelement 4 ist auf diese Weise gegen Lösen gesichert. Die Baueinheit 4 überbrückt nun den Abstand S, so dass der selbsttätige Toleranzausgleich erreicht ist.

Beim weiteren Einschrauben der Schraube 6 wird das Lösemoment (Reibmoment) der Mitschleppverbindung 46, 54 überwunden, so dass sich die Schraube 6 relativ zu dem Verstellelement 4 dreht. Hierbei formt das Gewinde 54 der Schraube 6 in der glattwandigen Bohrung 16 des Aufnahmeelementes 2 das Gegengewinde 56, wodurch zwischen der Schraube 6 und dem Aufnahmeelement 2 eine zweite Gewindeverbindung entsteht. Diese zweite Gewindeverbindung hat eine Gangrichtung, die zu derjenigen der Gewindeverbindung 28, 48 entgegengesetzt ist; im vorliegenden Ausführungsbeispiel sind daher das Gewinde 54 der Schraube 6 und das im Aufnahmeelement 2 gebildete Gegengewinde 56 rechtsgängig.

Wenn die Schraube 6 bis zur Anlage des Schraubenkopfes 50 am Bauteil B eingeschraubt ist, ist die Befestigungseinrichtung fertig montiert, s. Fig. 10 und 14. Wie bereits erwähnt, entsteht hierdurch nicht notwendigerweise eine kraftschlüssige Verbindung, da die Bauteile A und B noch an anderen Stellen (nicht gezeigt) geführt sein können. Es versteht sich jedoch, dass die Befestigungseinrichtung je nach Anwendungsfall auch eine kraftschlüssige Verbindung zwischen den Bauteilen A und B herstellen könnte.

Bei dem dargestellten Ausführungsbeispiel haben das Aufnahmeelement 2 und das Verstellelement 4 unrunde Umfangskonturen in Form eines Sechskants, die in den durch die Rastverbindung vorgegebenen Winkelpositionen miteinander fluchten. Bei einer abgewandelten Ausführungsform hat das Verstellelement eine andere Umfangskontur als das Aufnahmeelement, beispielsweise eine kreisrunde Kontur. Hierbei muss allerdings sichergestellt sein, dass die Umfangskontur des Verstellelementes nicht über diejenige des Aufnahmeelementes vorsteht.

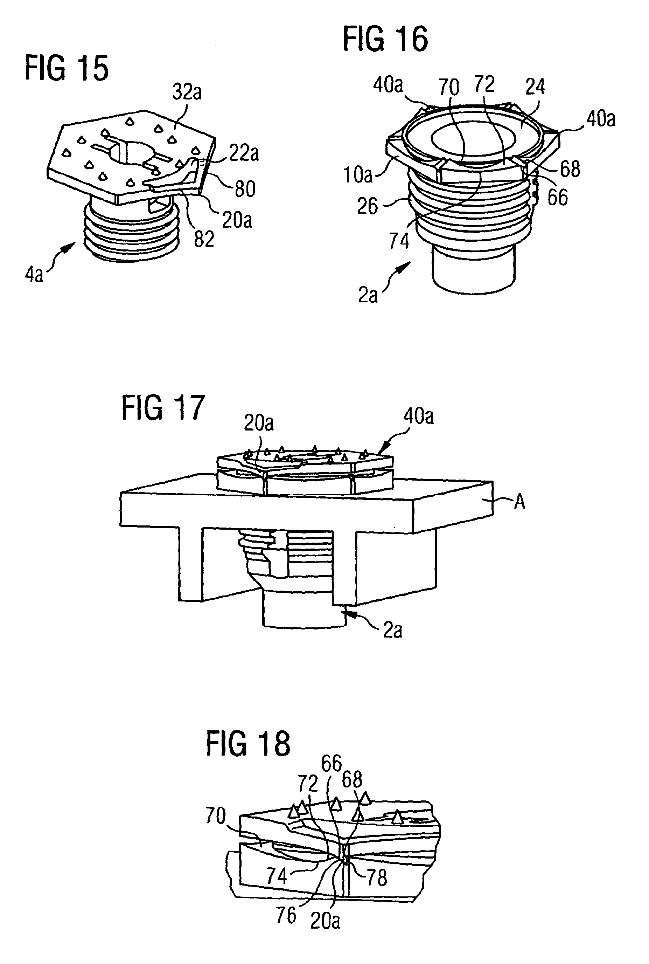

Anhand der Figuren 15 bis 18 wird eine weitere abgewandelte Ausführungsform der Erfindung näher erläutert. Die in diesen Figuren dargestellte abgewandelte Ausführungsform entspricht weitgehend der anhand der Figuren 1 bis 14 beschriebenen Ausführungsform. Identische Einzelteile wurden daher mit den gleichen Bezugszeichen bezeichnet, während abgewandelte Einzelteile mit denselben Bezugszeichen unter Hinzufügung des Buchstabens a bezeichnet wurden. Unterschiedlich ist im Wesentlichen lediglich die Ausgestaltung der Rastverbindung 20a, 40a.

Bei dem Ausführungsbeispiel der Figuren 15 bis 19 ist der Rastvorsprung 20a am Verstellelement 4a vorgesehen, während die über den Umfang verteilten Rastvertiefungen 40a am Aufnahmeelement 2a vorgesehen sind.

Jede der Rastvertiefungen 40a hat die Form einer stirnseitig am Flansch 10a des Aufnahmeelementes 2a vorgesehenen Kerbe, die auf einer Seite von einer axial verlaufenden Anschlagfläche 68 und auf der anderen Seite von einer Schrägfläche 66 begrenzt wird. Jeweils zwei benachbarte Rastvertiefungen 40a sind durch zwei Rampenflächen 70, 72 verbunden, die ausgehend von den beiden benachbarten Rastvertiefungen 40a schräg nach unten (in den Figuren 16 bis 18) verlaufen und sich in einer Talsohle 74 treffen.

Der Rastvorsprung 20a hat die Form eines Sägezahnes, der auf einer Seite von einer axial verlaufenden Anschlagfläche 78 und auf der anderen Seite von einer Schrägfläche 76 begrenzt wird. Die Anschlagflächen 68, 78 und die Schrägflächen 66, 76 des Rastvorsprunges 20a und der Rastvertiefungen 40a wirken miteinander zusammen, wie noch genauer erläutert wird.

Der Rastvorsprung 20a ist bei dem Ausführungsbeispiel der Figuren 15 bis 18 an einem dünnen Materialstreifen vorgesehen, der sich aus zwei Armen 80, 82 zusammensetzt. Wie insbesondere in den Figuren 15, 17 und 18 zu sehen ist, verläuft der Materialstreifen 80, 82 am äußeren Umfang des Flansches 32a des Verstellelementes 4a in Umfangsrichtung und ist dadurch gebildet, dass er von dem übrigen Bereich des Flansches 32a durch eine durchgehende Ausnehmung 22a im Flansch 32a getrennt ist. Somit ist der Materialstreifen 80, 82 lediglich an seinen entgegengesetzten Enden an dem Flansch 32a des Verstellelementes 4a angeformt. Die beiden Arme 80, 82 des Materialstreifens sind geringfügig nach unten (in den Figuren 15, 17 und 18) geneigt und treffen sich in dem Rastvorsprung 20a. Aufgrund der beschriebenen Geometrie und des verwendeten Werkstoffes (Kunststoffes) ist der Rastvorsprung 20a axial federnd verformbar, um in der gewünschten Weise mit den Rastvertiefungen 40a zusammenwirken zu können.

Wenn beim Verschrauben des Verstellelementes 4a mit dem Aufnahmeelement 2a der Flansch 32a des Verstellelementes 4a sich dem Flansch 10a des Aufnahmeelementes 2a nähert, gleitet der Rastvorsprung 20a entlang der Rampenfläche 72 einer der Rastvertiefungen 40a, bis der Rastvorsprung 20a in die entsprechende Rastvertiefung 40a einschnappt (s. Figuren 17, 18). In dieser Raststellung liegen die axial verlaufenden Anschlagflächen 68, 78 des Verstellelementes 4a und des Aufnahmeelementes 2a aneinander an, so dass eine weitere Drehung des Verstellelementes 4a relativ zu dem Aufnahmeelement 2a verhindert wird. Die Gefahr einer Verkonterung zwischen dem Verstellelement 4a und dem Aufnahmeelement 2a ist somit vermieden.

Eine gegensinnige Drehung des Verstellelementes 4a relativ zu dem Aufnahmeelement 2a wird durch die Schrägflächen 66, 76 ermöglicht. Auch bei dieser Ausführungsform ist das durch die Schrägflächen 66, 76 definierte Lösemoment der Rastverbindung kleiner als das Lösemoment der Mitschleppverbindung. Wenn daher beim Toleranzausgleichvorgang die Schraube in das Verstellelement 4a eingedreht wird, kann die Befestigungsschraube wie bei dem vorhergehenden Ausführungsbeispiel das Verstellelement 4a aus dem Aufnahmeelement 2a herausschrauben, wobei der axial federnd "aufgehängte" Rastvorsprung 20a über die Schrägfläche 66 der betreffenden Rastvertiefung 40a rutscht.

Die Rastverbindung 20a, 40a der Ausführungsform der Figuren 15 bis 18 zeichnet sich daher durch präzise Funktionsweise und hohe Funktionssicherheit aus.

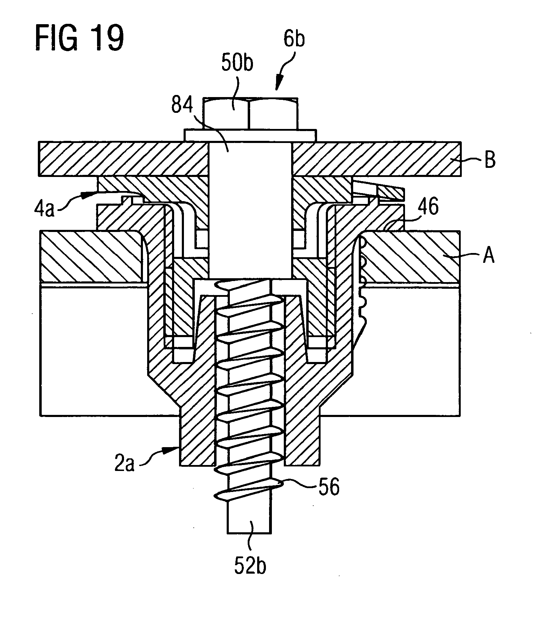

Die in Fig. 19 dargestellte Ausführungsform der Befestigungseinrichtung entspricht weitgehend den vorstehend beschriebenen Ausführungsformen. Unterschiedlich ist lediglich die Ausgestaltung der Mitschleppverbindung zwischen dem Verstellelement 4a und der Schraube 6b. In diesem Fall ist die Befestigungsschraube 6b so ausgebildet, dass axial zwischen dem Gewinde 56 des Schraubenschaftes 52b und dem Kopf 50b der Schraube 6b ein glatter Schaftabschnitt 84 vorgesehen ist, der im dargestellten Ausführungsbeispiel zylindrische Form hat. Die elastisch verformbaren Mitschlepparme 46 des Verstellelementes 4a wirken somit nicht mit dem Gewinde 56, sondern mit dem glatten Schaftabschnitt 84 zusammen, um die Mitschleppverbindung zu bilden. Die Funktionsweise der Mitschleppverbindung ist im Übrigen die gleiche wie bei den vorhergehenden Ausfiihrungsbeispielen.

## Patentansprüche

1. Befestigungseinrichtung zum Befestigen eines Bauteils B an einem Bauteil A mit selbsttätigem Ausgleich von Toleranzen im Abstand (S) zwischen dem Bauteil B und dem Bauteil A, bestehend aus
einem Aufnahmeelement (2), das einstückig ausgebildet ist und an dem Bauteil A über ein Außengewinde (26) festlegbar ist,
einem Verstellelement (4), das einstückig ausgebildet ist und über eine erste Gewindepaarung (28, 48) einer ersten Gangrichtung mit dem Aufnahmeelement (2) verschraubbar ist, und
einer Befestigungsschraube (6), die über eine zweite Gewindepaarung (54, 56) einer entgegengesetzten zweiten Gangrichtung in das Aufnahmeelement (2) einschraubbar und mit dem Verstellelement (4) durch eine lösbare Mitschleppverbindung (46, 54) verbindbar ist, um beim Drehen der Befestigungsschraube (6) das Verstellelement (4) mitzudrehen und dadurch zwecks Toleranzausgleich in Anlage mit dem Bauteil B zu bewegen,
wobei das Verstellelement (4) beim Verschrauben mit dem Aufnahmeelement (2) in eine als Transport- und Einbaulage dienende Endstellung bewegbar ist, in der das Aufnahmeelement (2) und das Verstellelement (4) durch eine lösbare Rastverbindung (20, 40) in einer von mehreren vorgegebenen Winkelpositionen zueinander gehalten werden, während die lösbare Rastverbindung (20, 40) einen einzelnen Rastvorsprung (20) und mehrere Rastvertiefungen (40) aufweist, deren Anzahl der Anzahl der vorgegebenen Winkelpositionen entspricht, wobei der Rastvorsprung (20) über die zugehörige Stirnfläche (18) des Aufnahmeelementes oder Verstellelementes axial um einen Betrag vorsteht, der ungefähr gleich der Gewindesteigung der ersten Gewindepaarung (28, 48) geteilt durch die Anzahl der vorgegebenen Winkelpositionen ist, wobei Flansche (10, 32) des Aufnahmeelements (2) und des Verstellelements (4) zum Ansetzen eines gemeinsamen Schraubschlüssels unrunde Umfangskonturen haben, die in den vorgegebenen Winkelpositionen miteinander fluchten.

2. Befestigungseinrichtung nach Anspruch 1, **dadurch gekennzeichnet, dass** die lösbare Mitschleppverbindung (46, 54) ein größeres Lösemoment als die lösbare Rastverbindung (20, 40) hat.

3. Befestigungseinrichtung nach Anspruch 1, **dadurch gekennzeichnet, dass** die Umfangskonturen des Aufnahmeelementes (2) und des Verstellelementes (4) als Mehrkant, insbesondere Sechskant, ausgebildet sind, deren Kantenanzahl der Anzahl der vorgegebenen Winkelpositionen entspricht.

4. Befestigungseinrichtung nach einem der vorhergehenden Ansprüche, **dadurch gekennzeichnet, dass** die lösbare Rastverbindung (20, 40) an einander zugewandten Stirnflächen (18, 38) des Aufnahmeelementes (2) und Verstellelementes (4) vorgesehen ist.

5. Befestigungseinrichtung nach Anspruch 1 oder 2, **dadurch gekennzeichnet, dass** der Rastvorsprung (20) zum Erhöhen seiner Elastizität aus einer Ausnehmung (22) in der zugehörigen Stirnfläche (18) des Verstellelementes oder Aufnahmeelementes vorsteht.

6. Befestigungseinrichtung nach einem der vorhergehenden Ansprüche, **dadurch gekennzeichnet, dass** die erste Gewindepaarung (28, 48) ein Innengewinde (28) des Aufnahmeelementes (2) und ein Außengewinde (48) des Verstellelementes (4) aufweist.

7. Befestigungseinrichtung nach einem der vorhergehenden Ansprüche, **dadurch gekennzeichnet, dass** die zweite Gewindepaarung (54, 56) ein Gewinde (54) der Schraube (6) und ein Gegengewinde (56) aufweist, das das Gewinde (54) der Schraube (6) in einer glattwandigen Bohrung (16) des Aufnahmeelementes (2) formt.

8. Befestigungseinrichtung nach Anspruch 6 und 7, **dadurch gekennzeichnet, dass** das Innengewinde (28) des Aufnahmeelementes (2) an einer hülsenförmigen Wand (25) und die glattwandige Bohrung (16) des Aufnahmeelementes (2) in einem hülsenförmigen Ansatz (14) gebildet sind, welche durch einen Ringraum voneinander getrennt sind, in den das Verstellelement (4) in seiner Endstellung eintaucht.

9. Befestigungseinrichtung nach einem der vorhergehenden Ansprüche, **dadurch gekennzeichnet, dass** das Aufnahmeelement (2) ein selbstformendes und/oder -furchendes Außengewinde (26) hat, das in eine glattwandige Bohrung (60) des Bauteils A einschraubbar ist, um mit diesem eine Kunststoff-in-Kunststoff-Gewindeverbindung zu bilden.

10. Befestigungseinrichtung nach einem der vorhergehenden Ansprüche, **dadurch gekennzeichnet, dass** die Flansche (10, 32) jeweils an einem axialen Ende des Aufnahmeelementes (2) und Verstellelementes (4) vorgesehen sind.

11. Befestigungseinrichtung nach Anspruch 10, **dadurch gekennzeichnet, dass** die Mitschleppverbindung (46, 54) elastische Mitschlepparme (46) aufweist, die am Innenumfang des Flansches (32) des Verstellelementes (4) angeformt sind, im wesentlichen axial verlaufen und radial in Anlage mit einem Gewinde (54) oder einem glatten Schaftabschnitt (84) der Befestigungsschraube (6; 6b) andrückbar sind.

12. Befestigungseinrichtung nach einem der vorhergehenden Ansprüche, **dadurch gekennzeichnet, dass** das Verstellelement (4) an einer axialen Stirnfläche (34) mehrere Spitzen (36) aufweist, die beim Anlegen des Verstellelementes (4) an dem Bauteil B in das Material des Bauteils B eindringen.

13. Befestigungseinrichtung nach einem der vorhergehenden Ansprüche, **dadurch gekennzeichnet, dass** das Verstellelement (4) und das Aufnahmeelement (2) aus Kunststoff bestehen.

14. Befestigungseinrichtung nach Anspruch 13, **dadurch gekennzeichnet, dass** das Aufnahmeelement (2) aus einem faserverstärkten Kunststoff, insbesondere einem PPA, besteht.

15. Befestigungseinrichtung nach Anspruch 13 oder 14, **dadurch gekennzeichnet, dass** das Verstellelement (4) aus einem faserverstärkten Kunststoff, insbesondere einem PA, besteht.

16. Befestigungseinrichtung nach einem der vorhergehenden Ansprüche, **dadurch gekennzeichnet, dass** jede der Rastvertiefungen (40a) eine im Wesentlichen axial verlaufende Anschlagfläche (68) hat, die mit einer im Wesentlichen axial verlaufenden Anschlagfläche (78) des Rastvorsprunges (20a) zusammenwirkt, um eine Bewegung des Verstellelementes (4a) über die Endstellung hinaus zu verhindern.

17. Befestigungseinrichtung nach Anspruch 16, **dadurch gekennzeichnet, dass** jede der Rastvertiefungen (40a) eine Schrägfläche (66) aufweist, die mit einer entsprechenden Schrägfläche (76) des Rastvorsprunges (20a) zusammenwirkt, um eine entgegengerichtete Bewegung des Verstellelementes aus der Endstellung zu ermöglichen.

18. Befestigungseinrichtung nach Anspruch 16 oder 17, **dadurch gekennzeichnet, dass** zwischen jeweils zwei benachbarten Rastvertiefungen (40a) zwei gegensinnig geneigte Rampenflächen (70, 72) verlaufen.

19. Befestigungseinrichtung nach einem der Ansprüche 16 bis 18, **dadurch gekennzeichnet, dass** der Rastvorsprung (20a) an einem in Umfangsrichtung verlaufenden elastisch verformbaren Materialstreifen (80, 82) vorgesehen ist, der an seinen entgegengesetzten Enden an dem verbleibenden Bereich des Aufnahmeelementes oder Verstellelementes angeformt ist, im Übrigen jedoch von dem verbleibenden Bereich durch eine durchgehende Ausnehmung (22a) getrennt ist.

20. Baueinheit aus einem Aufnahmeelement (2; 2a) und einem Verstellelement (4; 4a) einer Befestigungseinrichtung nach einem der vorhergehenden Ansprüche.

## Claims

1. A fastening apparatus for fastening a component B to a component A with automatic compensation of tolerances in the separation distance (S) between the component B and the component A, consisting of
a receiving element (2), which is designed as a single piece and can be fixed on component A via an outer thread (26),
an adjustment element (4), which is designed as a single piece and can be screwed to the receiving element (2) via a first thread pairing (28, 48) of a first thread direction, and
a fastening screw (6), which can be screwed into the receiving element (2) via a second thread pairing (54, 56) of an opposite second thread direction and can be connected to the adjustment element (4) via a detachable drag connection (46, 54), in order to also turn the adjustment element (4) when the fastening screw (6) is turned, and to thereby move it, for the purpose of tolerance compensation, into abutment with component B,
wherein when screwed into the receiving element (2), the adjustment element (4) can be moved to an end position serving as transport and installation position, in which the receiving element (2) and the adjustment element (4) are held together in one of several pre-determined angle positions via a detachable latch connection (20, 40), whilst the detachable latch connection (20, 40) has a single latch protrusion (20) and a plurality of latch recesses (40), whose number corresponds to the number of pre-determined angle positions, wherein the latch protrusion (20) projects axially beyond the associated front surface (18) of the receiving element or the adjustment element by an amount that is approximately equal to the thread pitch of the first thread pairing (28, 48) divided by the number of pre-determined angle positions,
wherein
flanges (10, 32) of the receiving element (2) and of the adjustment element (4) have non-circular circumferential contours, which align with each other in the predetermined angle positions, for attaching a common adjustable spanner.

2. The fastening apparatus according to claim 1, **characterized in that** the detachable drag connection (46, 54) has a greater release torque than the detachable latch connection (20, 40).

3. The fastening apparatus according to claim 1, **characterized in that** the circumferential contours of the receiving element (2) and of the adjustment element (4) are designed to have multiple edges, particularly hexagonal, whose number of edges correspond to the number of pre-determined angle positions.

4. The fastening apparatus according to one of the preceding claims, **characterized in that** the detachable latch connection (20, 40) is provided on front surfaces (18, 38), facing each other, of the receiving element (2) and adjustment element (4).

5. The fastening apparatus according to claim 1 or 2, **characterized in that** the latch protrusion (20) protrudes from a recess (22) in the associated front surface (18) of the adjustment element or receiving element, for increasing its elasticity.

6. The fastening apparatus according to one of the preceding claims, **characterized in that** the first thread pairing (28, 48) has an internal thread (28) of the receiving element (2) and an external thread (48) of the adjustment element (4).

7. The fastening apparatus according to one of the preceding claims, **characterized in that** the second thread pairing (54, 56) has a thread (54) of the screw (6) and a counter thread (56), that forms the thread (54) of the screw (6) in a smooth-walled bore hole (16) of the receiving element (2).

8. The fastening apparatus according to claim 6 and 7, **characterized in that** the internal thread (28) of the receiving element (2) is formed on a sleeve-shaped wall (25) and the smooth-walled bore hole (16) of the receiving element (2) is formed in a sleeve-shaped socket (14), which are separated from each other by an annular space, into which the adjustment element (4) immerses in its end position.

9. The fastening apparatus according to one of the preceding claims, **characterized in that** the receiving element (2) has a self-forming and/or self-tapping external thread (26), which can be screwed into a smooth-walled bore hole (60) of the component A, in order to form together with it a plastic-in-plastic threaded connection.

10. The fastening apparatus according to one of the preceding claims, **characterized in that** the flanges (10, 32) are each provided on an axial end of the receiving element (2) and adjustment element (4).

11. The fastening apparatus according to claim 10, **characterized in that** the drag connection (46, 54) has elastic drag arms (46), which are formed on the internal perimeter of the flange (32) of the adjustment element (4), run primarily axially and can be pressed radially into contact with a thread (54) or a smooth shaft section (84) of the fastening screw (6; 6b).

12. The fastening apparatus according to one of the preceding claims, **characterized in that** the adjustment element (4) on one axial front surface (34) has several nibs (36), which penetrate into the material of component B when the adjustment element (4) is placed on component B.

13. The fastening apparatus according to one of the preceding claims, **characterized in that** the adjustment element (4) and the receiving element (2) are made of plastic.

14. The fastening apparatus according to claim 13, **characterized in that** the receiving element (2) consists of a fiber-reinforced plastic, in particular a PPA.

15. The fastening apparatus according to claim 13 or 14, **characterized in that** the adjustment element (4) consists of a fiber-reinforced plastic, in particular a PA.

16. The fastening apparatus according to one of the preceding claims, **characterized in that** each of the latch recesses (40a) has a substantially axially extending stop surface (68) that interacts with a substantially axially extending stop surface (78) of the latch protrusion (20a), in order to prevent movement of the adjustment element (4a) beyond the end position.

17. The fastening apparatus according to claim 16, **characterized in that** each of the latch recesses (40a) has an angular face (66) that interacts with a corresponding angular face (76) of the latch protrusion (20a) in order to allow an opposite movement of the adjustment element out of the end position.

18. The fastening apparatus according to claim 16 or 17, **characterized in that** two oppositely inclined ramp surfaces (70, 72) run between every two adjacent latch recesses (40a).

19. The fastening apparatus according to claim 16 to 18, **characterized in that** the latch protrusion (20a) is provided on an elastically deformable material strip (80, 82) running in the peripheral direction that on the opposite ends thereof is molded onto the remaining region of the receiving element or adjustment element, beyond that, however, is separated from the remaining region by a through recess (22a).

20. An assembly comprised of a receiving element (2; 2a) and an adjustment element (4; 4a) of a fastening apparatus according to one of the preceding claims.

## Revendications

1. Dispositif de fixation pour la fixation d'un composant B à un composant A à compensation automatique de tolérances à l'écart (S) entre le composant B et le composant A, constitué de
un élément de réception (2) qui est réalisé d'une pièce et peut être fixé au composant A par le biais d'un filet externe (26),
un élément d'ajustement (4) qui est réalisé d'une pièce et peut être vissé par le biais d'un premier appariement de filet (28, 48) d'un premier sens de pas avec l'élément de réception (2), et
une vis de fixation (6) qui peut être vissée par le biais d'un second appariement de filet (54, 56) d'un second sens de pas opposé dans l'élément de réception (2) et peut être reliée à l'élément d'ajustement (4) par une connexion accouplée amovible (46, 54) pour faire tourner l'élément d'ajustement (4) lors de la rotation de la vis de fixation (6) et le déplacer de ce fait en appui avec le composant B en vue d'une compensation de tolérances,
dans lequel l'élément d'ajustement (4) peut être déplacé lors du vissage avec l'élément de réception (2) dans une position finale servant de position de transport et de montage dans laquelle l'élément de réception (2) et l'élément d'ajustement (4) sont maintenus l'un par rapport à l'autre dans une de plusieurs positions angulaires prédéfinies par une connexion d'encliquetage amovible (20, 40) tandis que la connexion d'encliquetage amovible (20, 40) présente une saillie d'encliquetage individuelle (20) et plusieurs cavités d'encliquetage (40) dont le nombre correspond au nombre de positions angulaires prédéfinies, dans lequel la saillie d'encliquetage (20) dépasse au-dessus de la face frontale associée (18) de l'élément de réception ou de l'élément d'ajustement de manière axiale d'une distance qui est approximativement égale au pas de filetage du premier appariement de filet (28, 48) divisé par le nombre de positions angulaires prédéfinies, dans lequel des brides (10, 32) de l'élément de réception (2) et de l'élément d'ajustement (4) ont des contours périphériques ovales pour l'application d'une clé à vis commune qui s'alignent ensemble dans les positions angulaires prédéfinies.

2. Dispositif de fixation selon la revendication 1, **caractérisé en ce que** la connexion accouplée amovible (46, 54) a un couple de desserrage supérieur à la connexion d'encliquetage amovible (20, 40).

3. Dispositif de fixation selon la revendication 1, **caractérisé en ce que** les contours périphériques de l'élément de réception (2) et de l'élément d'ajustement (4) sont réalisés en tant que polygone, notamment d'hexagone dont le nombre de côtés correspond au nombre de positions angulaires prédéfinies.

4. Dispositif de fixation selon l'une quelconque des revendications précédentes, **caractérisé en ce que** la connexion d'encliquetage amovible (20, 40) est prévue sur des faces frontales tournées l'une vers l'autre (18, 38) de l'élément de réception (2) et de l'élément d'ajustement (4).

5. Dispositif de fixation selon la revendication 1 ou 2, **caractérisé en ce que** la saillie d'encliquetage (20) dépasse de son évidement (22) dans la face frontale associée (18) de l'élément d'ajustement ou de l'élément de réception en vue d'augmenter son élasticité.

6. Dispositif de fixation selon l'une quelconque des revendications précédentes, **caractérisé en ce que** le premier appariement de filet (28, 48) présente un filet interne (28) de l'élément de réception (2) et un filet externe (48) de l'élément d'ajustement (4).

7. Dispositif de fixation selon l'une quelconque des revendications précédentes, **caractérisé en ce que** la seconde appariement de filet (54, 56) présente un filet (54) de la vis (6) et un filet conjugué (56) qui moule le filet (54) de la vis (6) dans un alésage à paroi lisse (16) de l'élément de réception (2).

8. Dispositif de fixation selon les revendications 6 et 7, **caractérisé en ce que** le filet interne (28) de l'élément de réception (2) est formé sur une paroi en forme de manchon (25) et l'alésage à paroi lisse (16) de l'élément de réception (2) est formé dans un épaulement en forme de manchon (14), lesquels sont séparés l'un de l'autre par un espace annulaire dans lequel l'élément d'ajustement (4) plonge dans sa position finale.

9. Dispositif de fixation selon l'une quelconque des revendications précédentes, **caractérisé en ce que** l'élément de réception (2) a un filet externe (26) à moulage automatique et/ou à rayure automatique qui peut être vissé dans un alésage à paroi lisse (60) du composant A pour former avec celui-ci une connexion par filet de plastique dans du plastique.

10. Dispositif de fixation selon l'une quelconque des revendications précédentes, **caractérisé en ce que** les brides (10, 32) sont chacune prévues à une extrémité axiale de l'élément de réception (2) et de l'élément d'ajustement (4).

11. Dispositif de fixation selon la revendication 10, **caractérisé en ce que** la connexion accouplée (46, 54) présente des bras accouplés élastiques (46) qui sont moulés sur la périphérie interne de la bride (32) de l'élément d'ajustement (4), s'étendent essentiellement de manière axiale et peuvent être appuyés radialement en appui avec un filet (54) ou une section d'arbre lisse (84) de la vis de fixation (6 ; 6b).

12. Dispositif de fixation selon l'une quelconque des revendications précédentes, **caractérisé en ce que** l'élément d'ajustement (4) présente plusieurs pointes (36) sur une face frontale axiale (34) qui pénètrent dans le matériau du composant B lors de l'application de l'élément d'ajustement (4) contre le composant B.

13. Dispositif de fixation selon l'une quelconque des revendications précédentes, **caractérisé en ce que** l'élément d'ajustement (4) et l'élément de réception (2) se composent de plastique.

14. Dispositif de fixation selon la revendication 13, **caractérisé en ce que** l'élément de réception (2) se compose d'un plastique renforcé par des fibres, notamment d'un PPA.

15. Dispositif de fixation selon la revendication 13 ou 14, **caractérisé en ce que** l'élément d'ajustement (4) se compose d'un plastique renforcé par des fibres, notamment d'un PA.

16. Dispositif de fixation selon l'une quelconque des revendications précédentes, **caractérisé en ce que** chacune des cavités d'encliquetage (40a) a une surface de butée (68) s'étendant essentiellement de manière axiale qui coopère avec une surface de butée (78) s'étendant essentiellement de manière axiale de la saillie d'encliquetage (20a) pour empêcher un mouvement de l'élément d'ajustement (4a) au-delà de la position finale.

17. Dispositif de fixation selon la revendication 16, **caractérisé en ce que** chacune des cavités d'encliquetage (40a) présente une surface inclinée (66) qui coopère avec une surface inclinée correspondante (76) de la saillie d'encliquetage (20a) pour permettre un mouvement dans le sens opposé de l'élément d'ajustement hors de la position finale.

18. Dispositif de fixation selon la revendication 16 ou 17, **caractérisé en ce que** deux surfaces en rampe (70, 72) inclinées à sens opposé s'étendent entre deux cavités d'encliquetage voisines respectives (40a).

19. Dispositif de fixation selon l'une quelconque des revendications 16 à 18, **caractérisé en ce que** la saillie d'encliquetage (20a) est prévue sur une bande de matériau (80, 82) déformable élastiquement, s'étendant dans la direction périphérique qui est moulée à ses extrémités opposées sur la région restante de l'élément de réception ou de l'élément d'ajustement mais est du reste séparée de la région restante par un évidement traversant (22a).

20. Module de construction constitué d'un élément de réception (2 ; 2a) et d'un élément d'ajustement (4 ; 4a) d'un dispositif de fixation selon l'une quelconque des revendications précédentes.
